# EUROPÄISCHE PATENTSCHRIFT

(11) **EP 2 701 555 B1**
(45) Veröffentlichungstag und Bekanntmachung des Hinweises auf die Patenterteilung: **11.03.2015**
(21) Anmeldenummer: 13718114.5
(22) Anmeldetag: 12.04.2013
(51) Int. Cl.: B27D 5/00, B32B 27/08, B29C 63/00, B29C 65/16, A47B 95/04

(54) **KUNSTSTOFFKANTE, MÖBELPANEEL UND VERFAHREN ZUR HERSTELLUNG EINES MÖBELPANEELS MIT KUNSTSTOFFKANTE**
PLASTICS EDGE, FURNITURE PANEL AND METHOD FOR PRODUCING A FURNITURE PANEL WITH A PLASTICS EDGE
CHANT EN MATIÈRE PLASTIQUE, PANNEAU DE MEUBLE ET PROCÉDÉ DE FABRICATION D'UN PANNEAU DE MEUBLE DOTÉ D'UN CHANT EN MATIÈRE PLASTIQUE

(30) Priorität: 12.04.2012 DE 102012007281
(43) Veröffentlichungstag der Anmeldung: 05.03.2014
(73) Patentinhaber: Bulthaup GmbH & Co. KG, 84155 Bodenkirchen (DE)
(72) Erfinder: ECKERT, Mark, O., 84155 Bodenkirchen (DE); RIEGER, Roger, 84155 Bodenkirchen (DE); LANGER, Otto, 84155 Bodenkirchen (DE); STIGLER, Martin, 84155 Bodenkirchen (DE)
(74) Vertreter: Thoma, Michael
(86) Internationale Anmeldenummer: PCT/EP2013/001077
(87) Internationale Veröffentlichungsnummer: WO 2013/152866

(56) Entgegenhaltungen:
- EP-A1- 1 163 864
- DD-A1- 124 170
- DE-U1- 29 903 734

## Beschreibung

Die vorliegende Erfindung betrifft allgemein Möbelpaneele mit einer Kunststoffkante, die durch teilweises Aufschmelzen an den Paneelkorpus gefügt wird. Die Erfindung betrifft dabei im Speziellen eine solche Kunststoffkante aus einem thermoplastischen Basismaterial, die im teilweise aufgeschmolzenen Zustand mit dem Möbelstück fügbar ist, sowie ein Verfahren zur Herstellung des Möbelpaneels, bei dem die Kunststoffkante auf ihrer dem Paneelkorpus zugewandten Seite mittels Laserstrahlung und/oder heißem Gas- oder Plamastrahl aufgeschmolzen und mit der aufgeschmolzenen Oberfläche gegen den Paneelkorpus gedrückt wird, um die Kunststoffkante mit dem Paneelkorpus zu fügen.

Bei herkömmlichen Kantenkonzepten für Möbelstücke werden Kunststoffkanten, oder auch Holz- bzw. Aluminiumkanten maschinell auf speziellen Anlagen auf den Möbelkorpus aufgefahren, wobei die Verklebung über einen Heißschmelzkleber erfolgt, der im Durchlauf mittels einer Leimwalze aufgewalzt wird bzw. in einem vorhergehenden, separaten Arbeitsgang auf die Kante aufgebracht und sodann beim Aufbringen der Kante beispielsweise mittels einer Heißluftdusche, mittels heißem Gas- oder Plasmastrahl oder Laserstrahl wieder verflüssigt wird. Ein solches Aufkleben der Kanten führt jedoch zu einer Kleberfuge, die Schmutz fängt und auch selbst zu Verfärbungen neigt.

Um die unschönen, sich verfärbenden Klebefugen zu vermeiden, die beim herkömmlichen Aufkleben von Kunststoffkanten auf Möbelpaneele mittels Klebstoff entstehen, wurde bereits vorgeschlagen, unmittelbar die Kunststoffkante selbst mit dem Paneelkorpus zu verschweißen. Hierbei wird beispielsweise mittels Laserstrahlung eine Oberflächenschicht der aus thermoplastischem Kunststoff bestehenden Kante aufgeschmolzen und gegen den Paneelkorpus gedrückt, so dass der aufgeschmolzene Kunststoff in die Mikrostrukturen der Paneeloberfläche fließt und beim Wiedererstarren die Kunststoffkante form- und/oder stoffschlüssig an dem Paneelkorpus gehalten wird. Ein Formschluss im Sinne einer Mikroverhakung entsteht hierbei durch die in die Poren beispielsweise eines Holzpaneels einströmende Kunststoffschmelze, während ein Stoffschluss durch entsprechende Wahl der Materialpaarung erreicht werden kann, beispielsweise indem in dem Kunststoffmaterial reaktive Gruppen für eine zusätliche chemische Bindung zwischen der Schmelzschicht und dem Verbindungspartner im Möbelpaneel vorgesehen werden. Das Ergebnis ist eine fugenlose Verschweißung bzw. Verbindung zwischen Träger und Kante.

Beim Aufschweißen von thermoplastischen Kunststoffkanten ist jedoch insbesondere die Verwendung sehr dünner Kanten schwierig, da ein vollständiges Aufschmelzen bzw. ein übermäßiges Erweichen droht, je dünner die Kante wird. Um die Kante zur Erzielung einer guten Verbindung mit ausreichender Kraft gegen den Paneelkorpus drücken zu können, sollte nur eine recht dünne Schicht der Kunststoffkante aufgeschmolzen und die dem Paneelkorpus abgewandte Seite der Kunststoffkante ausreichend hart bleiben, um beim Ansetzen eines Presswerkzeugs keine ungewollten Verformungen der gesamten Kante zu erzielen.

Ein solches fugenloses Aufschweißen einer Kunststoffkante auf ein Möbelpaneel mittels Laserstrahlung zeigt beispielsweise die EP 11 63 864, die vorschlägt, ein Kantenband mit unterschiedlich hart ausgebildeten bzw. leichter aufschmelzbaren-Schichten zu verwenden, um mit der weicheren Schicht das Aufschmelzen zu erleichtern und auf der dem Paneelkorpus abgewandten Seite dennoch eine harte, widerstandsfähige Schicht zu haben.

Die WO 2009/026977 schlägt eine Kantenleiste für Möbelstücke vor, die eine mit einer Strukturschicht koextrudierte Schmelzschicht besitzt, in der polare und unpolare Anteile enthalten sein sollen, um eine gute Affinität zu den in Holzwerkstoffen enthaltenen Zellulosen mit OH-Gruppen und damit eine gute Bindung der Kunststoffkante an dem Paneelkorpus zu erreichen.

Die DE 20 2010 004 931 U1 schlägt ebenfalls eine Kantenleiste aus thermoplastischem Kunststoffmaterial vor, welches eine mehrschichtige, koextrudierte Struktur haben soll, die einerseits eine im Schmelzezustand leicht fließende Schmelzschicht und andererseits eine damit koextrudierte Oberschicht umfassen soll, wobei zwischen der Oberschicht und der Schmelzschicht ggf. eine trennende Zwischenschicht vorgesehen werden soll, um an sich miteinander unverträgliche, durch Koextrusion nicht kombinierbare Polymere für die Oberschicht und die Schmelzschicht verwenden zu können.

Aus der EP 10 80 854 ist weiterhin ein Möbelpaneel bekannt, auf das mittels Klebstoff eine Kunststoffleiste aufgeklebt wird.

Die Schrift EP 18 52 242 beschreibt das Befestigen einer thermoplastischen Kunststoffkante auf einem Holzpaneel, wobei hier vorgeschlagen wird, auf die Kunststoffkante eine Schmelzklebstoffschicht mittels Koextrusion aufzubringen und diese Schmelzklebstoffschicht beim Fügen der Kunststoffkante auf das Paneel mittels Laser aufzuschmelzen.

Die DE 20 2009 006 793 U1 beschreibt eine Fügevorrichtung, mittels derer Kunststoffkanten auf Möbelpaneele aufgebracht werden können, wobei hier zum Anpressen der Kunststoffkante zwei in Förderrichtung des Paneels und der Kunststoffkante überlappend angeordnete Andrückrollen vorgesehen sind, um das Kantenband im kurzen Zeitfenster des noch offenen Leims auftragen und damit die Sichtbarkeit der Leimfuge verringern zu können.

Beim fugenlosen Aufschweißen solcher Kunststoffkanten werden die auseinander laufenden Anforderungen von den bisherigen Lösungen jedoch nur unzureichend erfüllt. Zwar kann durch die vorgeschlagenen mehrschichtigen Kunststoffkanten grundsätzlich die Bindung mit dem Paneelkorpus verbessert und gleichzeitig eine ausreichende Härte der Außenseite der Kunststoffkante erzielt werden. Zudem wird dem Problem entgegengewirkt, dass beim Aufschweißen einerseits die eine Seite der Kante ausreichend aufgeschmolzen und verflüssigt werden muss, während andererseits die dem Paneel abgewandte Seite der Kunststoffkante ausreichend hart bleiben muss, um das Anpressen mittels entsprechender Presswerkzeuge zu ermöglichen. Andererseits treten hierdurch vor und nach dem Aufschweißen der Kunststoffkante, d.h. bei der Herstellung der Kunststoffkante und der späteren Benutzung des Möbelpaneels Probleme auf. Einerseits ist es schwierig bzw. fehleranfällig, mittels Koextrudierung die gewünschte Dünne der Schichten bzw. der Kunststoffkante insgesamt mit der gewünschten Maßhaltigkeit zu realisieren. Beispielsweise kommt es bei der Koextrudierung von Schmelzschichten mit weniger als 0,5 mm Dicke zu ungewünschten Toleranzen, welche dann zu unerwünschten Ergebnissen im fertigen Möbelprodukt führen und dessen Form und Maßhaltigkeit beeinträchtigen.

Zum anderen kommt es bei den bislang verwendeten mehrschichtigen Kanten durch unterschiedliche Ausdehnungskoeffizienten in den verschiedenen Schichten zu einer Wölbung der koextrudierten Kante und in der Folge zu Zugspannungen zwischen Kante und Holzwerkstoff. Die unterschiedlichen Materialzusammensetzungen in der Oberschicht und der Schmelzschicht der Kante verursachen oftmals einen Effekt ähnlich einem Bimetall. Schlimmstenfalls kann es sogar zu einer Delamination an der Kante kommen, insbesondere dann, wenn mit der Oberschicht und der Schmelzschicht wenig verträgliche Polymertypen zusammengeführt werden. Die in der Schrift DE 20 2010 004 931 U1 vorgeschlagene Maßnahme, zwischen den Schichten eine ausgleichende bzw. mit beiden Materialien kompatible Zwischenschicht vorzusehen, reduziert die erreichbare Dünnheit der Kante weiter und verschärft die Probleme der Farbgleichheit und der vorgenannten Verwölbung der Kante und der Zugspannungen in der Fügefläche.

Der vorliegenden Erfindung liegt daher die Aufgabe zugrunde, eine verbesserte Kunststoffkante, ein verbessertes Möbelpaneel und ein verbessertes Verfahren zur Herstellung eines solchen Möbelpaneels von jeweils der eingangs genannten Art zu schaffen, die Nachteile des Standes der Technik vermeiden und Letzteren in vorteilhafter Weise weiterbilden. Insbesondere sollen hohe Bindungskräfte zwischen einer auch sehr dünnen Kunststoffkante und dem Paneelkorpus mit einem einfach handhabbaren Fügeverfahren erreicht werden, ohne dies durch vor- oder nachgelagerte Probleme wie Beeinträchtigung der Maßhaltigkeit, der Farbgleichheit, des Kantenverzugs oder gar der Delamination der Kante und starker Zugspannungen in der Fügeschicht zu erkaufen.

Erfindungsgemäß wird die genannte Aufgabe durch eine Kunststoffkante gemäß Anspruch 1, ein Möbelpaneel gemäß Anspruch 17 und ein Verfahren zur Herstellung eines Möbelpaneels gemäß Anspruch 20 gelöst. Bevorzugte Ausgestaltungen der Erfindung sind Gegenstand der abhängigen Ansprüche.

Es wird also vorgeschlagen, dem thermoplastischen Basismaterial der Kunststoffkante als Zusatzstoff einen Viskositätsabsenker zur Verbesserung des Schmelzflusses zuzugeben und dabei der Kunststoffkante einen einschichtigen Aufbau mit im Wesentlichen homogener Materialzusammensetzung über den gesamten Kunststoffkantenquerschnitt zu geben. Überraschenderweise kann durch die Zugabe des Viskositätsabsenkers trotz gleichmäßiger, homogener Materialverteilung über die ganze Kunststoffkante erreicht werden, dass beim Verschweißen der Kunststoffkante auf ein Möbelpaneel mittels Laserstrahlung oder heißem Gas- oder Plasmastrahl nur eine sehr dünne Schicht des Kantenbandes aufschmilzt und dabei ausreichend flüssig wird, während eine dem Paneelkorpus abgewandte Oberfläche der Kunststoffkante bzw. die nicht aufgeschmolzene Schicht gänzlich im festen Aggregatszustand verbleibt und nicht erweicht, wodurch einerseits die Schmelze leichtgängig und damit gut in die Porenstruktur der Paneeloberfläche fließen und dort einen hervorragenden Mikroformschluss ausbilden kann, während andererseits auf die Kante hohe Anpresskräfte ausgeübt werden können, ohne dass sich unter einer Erweichung des ganzen Kantenbandes Verformungen einstellen würden. Durch die Zugabe des Viskositätsabsenkers kann die aufzuschmelzende Oberflächenschicht der Kunststoffkante bereits bei sehr niedrigen Temperaturen ausreichend verflüssigt werden, wobei insgesamt mit geringeren in das Kunststoffmaterial eingebrachten Energiemengen gearbeitet werden und in Kombination mit der Art der Erwärmung bei einem vergleichsweise geringeren - natürlich immer noch hohen - Temperaturgradienten über den Querschnitt der Kante eine ausreichende Verflüssigung der zu fügenden Kantenseite erreicht werden kann, während die dem Paneelkorpus gegenüberliegende Kantenseite relativ kühl bleibt. Durch den Verflüssiger reicht eine Temperatur nur geringfügig über dem unteren Rand bzw. dem Beginnen des Erweichungstemperaturbereichs aus, um die zu fügende Kantenbandschicht ausreichend zu verflüssigen.

Gleichzeitig wird durch die zumindest näherungsweise homogene Materialverteilung ohne Schichtenbildung die Vorfertigung der Kunststoffkante deutlich vereinfacht, ein Verziehen der Kunststoffkante bei der Verarbeitung vermieden, die Maßhaltigkeit nach dem Aufschweißen verbessert und Wölbung oder gar eine Delamination des Kantenbands im aufgeschweißten Zustand verhindert. Die Materialverteilung kann hierbei bestenfalls tatsächlich gänzlich homogen und gleichmäßig über den Querschnitt ausgebildet sein, kann jedoch durchaus im Sinne von zufällig entstehenden, keiner schichtweisen Anordnung folgenden Unregelmäßigkeiten in der Praxis auch partielle Ungleichverteilungen enthalten, die sich in der Gesamtheit betrachtet jedoch wieder vergleichmäßigen. In jedem Fall ist die Kunststoffkante aber frei von koextrudierter Schichtbildung und besitzt über den Querschnitt und auch über die Länge des Kantenbands betrachtet im Wesentlichen gleich bleibende thermischen Ausdehnungskoeffizienten, so dass sich bei Erwärmung kein Verzug einstellt und eine Wölbung oder Delamination des Kantenbandesnicht auftreten kann. Insbesondere sind auch der genannte Viskositätsabsenker und ggf. weitere Zusatzstoffe gleichmäßig über den gesamten Kantenquerschnitt verteilt in das Basismaterial eingebracht, um Varianzen im thermischen Ausdehnungskoeffizienten, Farbungleichheiten oder andere mit einer schichtweisen Strukturierung einhergehende Probleme zu vermeiden.

Die gleichmäßige Verteilung des genannten Viskositätsabsenkers ist an sich auf den ersten Blick widersinnig, da der Viskositätsabsenker hierdurch auch in Schichten und Bereichen der Kunststoffkante vorliegt, die gerade nicht aufgeschmolzen werden sollen. In Verbindung mit dem gezielten Energieeintrag bei Laserstrahlung bzw. heißem Gas- oder Plasmastrahl und der schon ausreichenden Verflüssigung bei relativ niedrigen Temperaturen nur geringfügig über dem Beginn des thermoplastischen Schmelztemperaturbereichs bzw. dem unteren Rand der ErweichungsTemperaturbereichs kann die Energiebeaufschlagung der Kunststoffkante so niedrig gehalten werden, dass die schmelzeverflüssigende Wirkung der Viskositätsabsenker nur im gewünschten Bereich auftritt und der nicht aufzuschmelzende Teil der Kunststoffkante auch ohne spezielle Ausbildung dieser Schicht ausreichend hart bleibt.

Als Viskositätsabsenker können hierbei grundsätzlich verschiedene Materialien bzw. Stoffe zugegeben werden, durch deren Zugabe die Viskosität der Kunststoffkante im Vergleich zu einer Kunststoffkante, welche nur aus dem isolierten Basismaterial besteht, abgesenkt wird, und zwar dann, wenn man das isolierte Basismaterial und vergleichsweise dieses Basismaterial mit zugegebenem Viskositätsabsenker bei gleicher Temperatur betrachtet. Gegebenenfalls kann der Viskositätsabsenker auch eine Absenkung des erforderlichen Energieeintrags bzw. der erforderlichen Oberflächentemperatur bewirken, d.h. im Vergleich zum isolierten Basismaterial schmilzt dasselbe Basismaterial mit zugegebenem Viskositätsabsenker bei niedrigerer Temperatur auf. In Weiterbildung der Erfindung kann der Viskositätsabsenker beispielsweise ein Wachs umfassen, das vorteilhafterweise einen niedrigeren Schmelzpunkt als das thermoplastische Basismaterial besitzt. Je nach verwendetem thermoplastischen Basismaterial kann es vorteilhaft sein, wenn als Viskositätsabsenker ein Wachs mit einem Schmelzpunkt im Bereich von 50°C bis 140°C, vorzugsweise etwa 80°C bis 130°C verwendet wird.

In vorteilhafter Weiterbildung der Erfindung kann hierbei ein polares Polyethylenwachs und/oder ein unpolares Polyolefinwachs als Viskositätsabsenker verwendet werden. Bei gleichzeitiger Verwendung dieser beiden Wachse enthält die Kunststoffkante sowohl polare als auch unpolare Anteile, wodurch eine verbesserte Anbindung der Kunststoffkante insbesondere an Werkstoffe wie Holz erreicht werden. Die in Holzwerkstoffen enthaltenen Zellulosen, die OH-Gruppen enthalten, zeigen einen starken Dipolcharakter, so dass eine gute Anbindung der mit solchen polaren bzw. unpolaren Wachsen modifizierten Kunststoffkante erzielt wird. Alternativ oder zusätzlich können als Viskositätsabsenker aber auch andere Wachse zugegeben werden, beispielsweise chemisch modifizierte Hartwachse wie Montanesterwachse oder Sasolwachse, oder synthetische Wachse wie Polyalkylenwachse oder Polyethylenglykolwachse.

Der genannte Dipolcharakter kann prinzipiell auch bei der Wahl des thermoplastischen Basismaterials Berücksichtigung finden. Um aufgrund der genannten Wechselwirkung mit den OH-Gruppen der in Holzwerkstoffen enthaltenen Zellulosen hohe Bindungskräfte zwischen dem Kantenband und verschiedenen Panelkorpi aus Holz- und/oder anderen Werkstoffen zu erhalten, kann vorteilhafterweise als Kantenbandbasismaterial ein thermoplastischer Werkstoff mit polaren und/oder unpolraren Anteilen im Molekülaufbau gewählt werden. Alternativ oder zusätzlich können auch thermoplastische Basismaterialien mit reaktiven Molekülgruppen sinnvoll sein, um auch ionische Bindungen zu dem Panelkorpus zu erreichen.

Unabhängig vom konkret gewählten Basismaterial kann alternativ oder zusätzlich zu den vorgenannten Wachsen als Viskositätsabsenker auch zumindest ein thermoplastisches Elastomer zugegeben werden, vorzugsweise ein thermoplastisches Elastomer auf Olefinbasis, wobei vorteilhafterweise ein thermoplastisches Elastomer (TPE) mit einem Schmelzpunkt gewählt wird, der niedriger ist als der untere Rand des Schmelzbereichs des Basismaterials. Ein solches thermoplastisches Elastomer kann insbesondere aus der Gruppe der Werkstoffe umfassend Copolyamid-Elastomere (TPE-A), Polyester-Elastomere (TPE-E) und Polyurethan-Elastomere (TPE-U) ausgewählt sein, oder eine Mischung hieraus sein. Je nach gewähltem thermoplastischen Basismaterial kann ein thermoplastisches Elastomer mit einem Schmelzpunkt im Bereich von 80°C bis 140°C, vorzugsweise etwa 100°C bis 130°C zugegeben werden, so dass das thermoplastische Elastomer bereits verflüssigt ist, wenn beim Aufschmelzen der zu verflüssigenden Kantenschicht der Schmelzbereich des Basismaterials erreicht wird.

Alternativ oder zusätzlich zu solchen Wachsen und thermoplastischen Elastomeren können auch noch andere den Schmelzefluss verbessernde Materialien Verwendung finden, beispielsweise ein OH-Gruppen umfassendes Material und/oder, paraffinische Kohlenwasserstofföle und/oder Polypropylen-, Polybuten- bzw. Polyisopren-Oligomere.

Um einerseits eine ausreichende Viskositätsabsenkung und Verbesserung des Schmelzeflusses der aufzuschmelzenden Kantenschicht zu erzielen, andererseits jedoch eine vorzeitige Erweichung der nicht aufzuschmelzenden Kantenschicht zu vermeiden, wird/werden der bzw. die Viskositätsabsenker in geeignet dosierten Mengen zugegeben, wobei es sich als vorteilhaft erweist, wenn der bzw. die Viskositätsabsenker einen Gewichtsanteil im Bereich von 1-50 Gewichtsprozent, vorzugsweise 5-30 Gewichtsprozent, insbesondere etwa 5-20 Gewichtsprozent bezogen auf die Gesamtmenge des Kunststoffkantenmaterials besitzt. Wird der Viskositätsabsenker in zu niedrigen Mengen, insbesondere kleineren als den genannten Mengen zugegeben, tritt die gewünschte Verbesserung des Schmelzeflusses bei recht kurzzeitigem Aufschweißen mit niedrigen Temperaturen über dem unteren Rand des Schmelzbereichs des Basismaterials nicht ein. Wird umgekehrt zu viel Viskositätsabsenker, insbesondere größere als die genannten Mengen, zugegeben, kann eine ungewollte Erweichung der nicht aufzuschmelzenden Kantenteile eintreten, insbesondere wenn der Viskositätsabsenker einen deutlich niedrigeren Schmelzbereich als das Basismaterial besitzt.

In Weiterbildung der Erfindung wird der Viskositätsabsenker derart ausgebildet bzw. ausgewählt, dass der Schmelzpunkt des Viskositätsabsenkers um zumindest 10 Kelvin niedriger ist als der Schmelzbereich des Basismaterials, wobei der Schmelzpunkt des Viskositätsabsenkers vorteilhafterweise im Bereich von 60% bis 90% der unteren Grenze des Erweichungstemperaturbereichs des thermoplastischen Basismaterials (in Grad Kelvin) betragen kann.

Der Viskositätsabsenker kann grundsätzlich in verschiedener Art und Weise dem thermoplastischen Basismaterial zugegeben werden. In Weiterbildung der Erfindung können das Basismaterial und der Viskositätsabsenker eine Polymerlegierung im Sinne eines Gemenges aus fertigen Polymeren bilden, wie es beispielsweise bei der Compoundierung erreicht werden kann. Insbesondere kann die Kunststoffkante im Wege der einschichtigen Extrudierung aus den verschiedenen Ausgangsmaterialien gefertigt werden.

Alternativ zu einer solchen Einlagerung des Viskositätsabsenkers könnte prinzipiell auch zumindest ein Teil des zugegebenen Viskositätsabsenkers dem thermoplastischen Basismaterial im Wege der Copolymerisierung zugegeben werden, so dass das thermoplastische Basismaterial und der Viskositätsabsenker ein Copolymer bilden. Im Hinblick auf eine kostengünstige Fertigung und damit vertretbare Kantenbandkosten ist die vorgenannte Compoundierung jedoch von Vorteil.

In Weiterbildung der Erfindung können dem thermoplastischen Basismaterial weitere Zusatzstoff zugegeben werden. Insbesondere können Laserabsorberpartikel zur verbesserten Umwandlung von Laserstrahlung in Wärmeenergie zugegeben werden, wobei vorteilhafterweise die Absorberpartikel über den gesamten Kunststoffkantenquerschnitt im Wesentlichen gleichförmig in dem Basismaterial verteilt werden, so dass auch die zugegebenen Absorberpartikel keine Schichtstruktur bilden, sondern auch dort vorgesehen werden, wo sie an sich gar nicht benötigt werden, nämlich auch in den nicht aufzuschmelzenden Kunststoffschichten bzw. - bereichen. Durch gezielte Fokussierung des Laserstrahls und Auftreffen unter einem geeigneten Auftreffwinkel, d.h. Anstellwinkel des Laserstrahls zur aufzuschmelzenden Oberfläche kann trotz gleichmäßiger Absorberpartikelverteilung nur der Teil der Absorberpartikel aktiviert bzw. zur Energieumwandlung genutzt werden, welcher Teil in der aufzuschmelzenden Schicht liegt.

Die verwendeten Absorberpartikel sind dabei an die Wellenlänge des jeweils verwendeten Lasers angepaßt.

In vorteilhafter Weiterbildung der Erfindung werden dabei die Absorberpartikel derart ausgebildet und bemessen und/oder die Laserbeaufschlagung derart gesteuert, dass im Wesentlichen nur der Teil der Absorberpartikel, der in einer dem Paneelkorpus zugewandten Oberflächenschicht des Kunststoffbandes angeordnet ist, beaufschlagt wird und/oder die Laser- bzw. Plasmaenergie in Wärme umwandelt und nur eine Oberflächenschicht der Kunststoffkante mit einer Schichtdicke im Bereich von 0,05 mm bis 0,5 mm, vorzugsweise 0,1 mm bis 0,4 mm aufschmilzt.

Die Steuerung der Schichtdicke der aufzuschmelzenden Schicht kann vorteilhafterweise mittelbar durch Variation bzw. Beeinflussung des Absorptionskoeffizienten erreicht werden, der wiederum durch Beinflussung bzw. Einstellung der Konzentration der Absorberpartikel gesteuert werden kann.

Der Gewichtsanteil der Absorberpartikel kann hierbei an das jeweils gewählte thermoplastische Basismaterial und dessen Schmelzbereich angepasst werden, wobei vorteilhafterweise ein relativ niedriger Absorberpartikel-Gewichtsanteil im Bereich von etwa 0,001 bis 5 Gewichtsprozent, vorzugsweise 0,005 bis 0,5 Gewichtsprozent bezogen auf das Gesamtgewicht der Kunststoffkante vorgesehen wird.

In Weiterbildung der Erfindung können vorteilhafterweise Absorberpartikel verwendet werden, die im sichtbaren Wellenlängenbereich des Lichts keine eigene Farbe besitzen. Solche farblosen Absorberpartikel, bspw. Iriodinpartikel, können die optisch nahtlose, verfärbungsfreie Anbindung der Kante unterstützen.

Die Absorberpartikel werden vorteilhafterweise an den verwendeten Laser angepasst, insbesondere derart, dass die Absorberpartikel in dem jeweiligen Wellenlängenbereich des verwendeten Lasers eine starke Energie absorbierende Wirkung haben. Für Dioden-Laser, Nd-YAG-Laser und für Faser- bzw. Faden-Laser sind in der Kante vorgesehene Absorberpartikel besonders sinnvoll, weil Strahlung dieser Laser von den Kunststoffen selbst, d.h. dem Basismaterial kaum absorbiert werden. Für CO₂-Lase hingegen kann unter Umständen auf Absorberpartikel verzichtet werden, weil alle Polymere im Wellenlängenbereich eines CO₂-Lasers relativ stark absorbieren.

Um den Energieeintrag bezüglich der Tiefe der Kunststoffkante möglichst zu begrenzen und/oder nur die in der Oberflächenschicht vorgesehenen Absorberpartikel zu beaufschlagen, kann in vorteilhafter Weiterbildung der Erfindung der Laserstrahl und/oder Gas- oder Plasmastrahl unter einem spitzen Winkel auf die aufzuschmelzende Oberfläche der Kunststoffkante gegeben werden, wobei der Laserstrahl und/oder Gas- oder Plasmastrahl vorteilhafterweise unter einem Anstellwinkel von 5° bis 70°, vorzugsweise etwa 10° bis 40° auf die aufzuschmelzende Oberfläche gerichtet wird.

In vorteilhafter Weiterbildung der Erfindung kann der Laserstrahl im Wesentlichen parallel zu der Paneelkorpuskante, auf die die Kunststoffkante aufgebracht werden soll, auf die aufzuschmelzende Kunststoffkante gerichtet werden, wobei vorteilhafterweise das Kunststoffkantenband spitzwinklig dem Paneelkorpus zugeführt und der Laserstrahl auf den Kantenabschnitt gerichtet wird, welcher unmittelbar vor dem Anpressen gegen den Paneelkorpus liegt bzw. in unmittelbarer Nachbarschaft vor dem Fügepunkt liegt. Durch eine solche spitzwinklige Beaufschlagung mit einem Laserstrahl bzw. Gas- oder Plasmastrahl von der noch unbeschichteten Paneelkante her kann einerseits der Energieeintrag in die Kunststoffkante bzw. dessen Eindringtiefe in die Kante sehr niedrig gehalten werden, wodurch die dem Paneelkorpus abgewandte Seite bzw. die nicht aufzuschmelzende Schicht des Kantenbands kalt gehalten werden kann. Andererseits kann insbesondere dann, wenn die Kunststoffkante im Durchlaufverfahren gegen den Paneelkorpus gefahren wird, d.h. nach und nach ein weiter wandernder Abschnitt des Bandes gegen den Paneelkorpus gepresst wird, durch die Beaufschlagung des unmittelbar vor der Fügezone liegenden Kantenabschnitts mit einem Laserstrahl bzw. Gas- oder Plasmastrahl die Zeitspanne zwischen Aufschmelzen und Verpressen minimal gehalten werden, wodurch eine weitere Absenkung der Schmelzetemperatur und/oder des Energieeintrags erreicht werden kann.

In vorteilhafter Weiterbildung der Erfindung wird dabei der Laserstrahl bzw. Gas- oder Plasmastrahl zumindest teilweise bzw. abschnittsweise oszillierend über die aufzuschmelzende Oberfläche geführt, vorteilhafterweise quer zur Längsachse der Kunststoffkante oszillierend. Einer solchen oszillierenden Querbewegung kann eine kontinuierliche Vorschubbewegung in Längsrichtung der Kunststoffkante überlagert werden, sei es durch Bewegung des Laserstrahls oder durch eine kontinuierliche Bewegung der Kunststoffkante im Zusammenhang mit dem Aufpressen der Kunststoffkante im Durchlauf. Prinzipiell kann der Laserstrahl bzw. Gas- oder Plasmastrahl aber auch linear oder mit einer Mischung aus linearer und oszillierender Bewegung über die aufzuschmelzende Oberfläche geführt werden.

In vorteilhafter Weiterbildung der Erfindung wird hierbei mit einem ungepulsten Laser, d.h. im kontinuierlichen Betrieb im sog. CW-Modus gearbeitet, um eine möglichst lückenlose Oberflächenbestrahlung zu erzielen. Grundsätzlich kann jedoch sowohl mit gepulsten als auch mit ungepulsten Lasern gearbeitet werden, wobei im Falle eines gepulsten Laserbetriebs vorteilhafterweise mit hoher Pulsfrequenz gearbeitet wird, um eine zumindest näherungsweise lückenlose Oberflächenbestrahlung zu erzielen.

In vorteilhafter Weiterbildung der Erfindung wird hierbei nur etwa 5% bis 35%, vorzugsweise nur 10% bis 20% der Gesamtdicke der Kunststoffkante aufgeschmolzen, während eine dem Paneelkorpus abgewandte Oberfläche des Kunststoffbandes in einem Temperaturbereich von mindestens 50°C unter dem unteren Rand des Schmelzbereichs des Basismaterials gehalten wird. Je nach Dicke der Kunststoffkante und/oder je nach Material der Kunststoffkante wird die dem Paneelkorpus abgewandte Oberfläche der Kunststoffkante in einem Temperaturbereich unter 10.0°C, vorzugsweise unter 60°C gehalten.

Gegebenenfalls kann hierbei vorteilhafterweise eine Kühlung der dem Paneelkorpus abgewandten Oberfläche des Kunststoffbandes vorgesehen werden. Hierzu kann eine Kühlvorrichtung direkt die Kunststoffkante und/oder ein die Kunststoffkante gegen den Paneelkorpus drückendes Presswerkzeug kühlen.

Die Dicke der Kunststoffkante kann grundsätzlich variieren und je nach Anwendungszweck verschieden gewählt werden. In Weiterbildung der Erfindung kann die Kunststoffkante eine Dicke im Bereich von 0,5 bis 5 mm, vorzugsweise 0,6 bis 3 mm, insbesondere etwa 0,8 bis 1,3mm besitzen.

Hinsichtlich des thermoplastischen Basismaterials kann die Kunststoffkante grundsätzlich ebenfalls verschieden ausgebildet sein. Einheitliches Merkmal sollte dabei sein, daß das Kantenmaterial eine relativ hohe Affinität zu den für den Panelkorpus oft verwendeten Holzwerkstofffen haben, insbesondere durch Vorhandensein polarer Gruppen, die mit den dipolaren OH-Gruppen dieser Holzwerkstoffe Bindungskräfte entwickeln, wobei vorteilhafterweise solche Werkstoffe dieser Charakteristik ausgewählt werden, die hart sind bzw. eine ausreichende Härte besitzen, um den Anpresskräften beim Fertigungsprozess und/oder den Belastungen am fertigen Produkt zu widerstehen.

Das thermoplastische Basismaterial kann insbesondere Acrylnitrilbutadienstyrol (ABS), Polyvinylchlorid (PVC), Polypropylen (PP), Polyethylen (PE), Polycarbonat (PC), Polymethylmethacrylat (PMMA), Polyamid (PA), Copolyamid-Elastomere (TPE-A), Ethylen-Vinyl-Acetat (EVA), amorphe Polyaplphaolefine (APAO), Ethylenvinylacetat-Copolymerer (EVAC), Polyester (PES), Polyester-Elastomere (TPE-E) Polyurethan (PUR), Polyurethan-Elastomere (TPE-U) oder ggf. auch eine Mischung aus diesen genannten Materialien sein oder enthalten.

Insbesondere kann das thermoplastische Basismaterial Polypropylen sein. Polypropylen zeichnet sich durch seine UV-Beständigkeit sowie seine Chemikalienbeständigkeit aus und ist hierdurch für Möbelpaneele wie beispielsweise Küchenarbeitsplatten bestens geeignet, wobei dem Polypropylen zur Erhöhung der Bindungskräfte zu Holzwerkstoffen ein geeigneter Haftvermittler bzw. -erhöher zugegeben sein kann, bspw. Maleinsäure, die mit dem Polypropylen gepfropft werden kann, um am Polypropylen zu halten. Solche Haftvermittler bzw. Hafterhöher zum Erhöhen der Bindungskräfte am Holzwerkstoff können auch den anderen vorgenannten thermoplastischen Basismaterialien zugegeben werden.

Die vorliegende Erfindung wird nachfolgend anhand eines bevorzugten Ausführungsbeispiels und zugehöriger Zeichnungen näher erläutert. In den Zeichnungen zeigen:

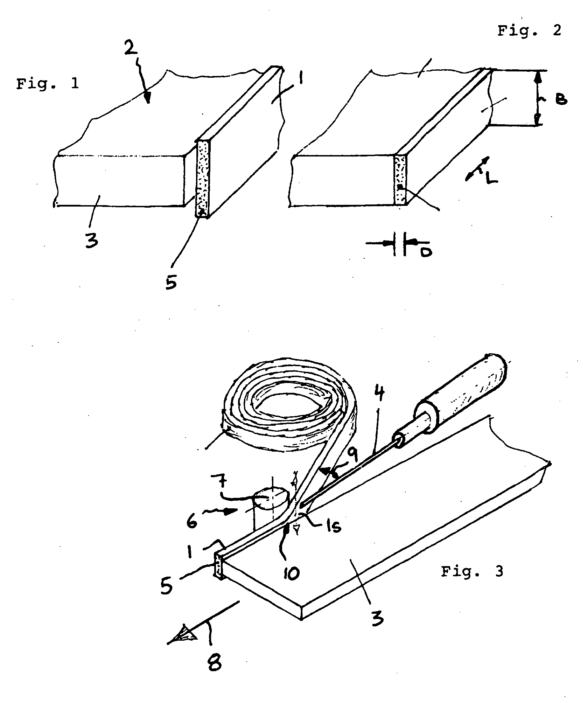

- Fig. 1:: eine schematische, perspektivische Darstellung des Paneelkorpus eines Möbelpaneels und einer daran aufzubringenden Kunststoffkante, wobei der Paneelkorpus und die Kunststoffkanten noch vor dem Fügen dargestellt sind,
- Fig. 2:: eine perspektivische, schematische Darstellung des Möbelpaneels aus Fig. 1 nach dem Fügen von Kunststoffkante und Paneelkorpus, wobei die Kunststoffkante nach dem Fügen nachbearbeitet wurde, um die vor dem Fügen überbreite Kunststoffkante in ihrer Breite an die Dicke des Paneelkorpus anzupassen, und
- Fig. 3:: eine schematische, perspektivische Darstellung des Fügeverfahrens zur Herstellung des Möbelpaneels aus Fig. 2, wobei die spitzwinklige Laserbeaufschlagung der aufzuschmelzenden Oberfläche der Kunststoffkante und das dabei im Durchlauf erfolgende Anpressen der Kunststoffkante auf den Paneelkorpus gezeigt sind.

Wie Fig. 1 zeigt, kann das Möbelpaneel 2 einen plattenförmigen Paneelkorpus 3 besitzen, der als Tür, Frontwand, Decke oder Boden, Seitenwand oder Rückwand eines Möbelstücks oder auch als Arbeitsplatte eines Tischs oder dergleichen dienen kann. Der Paneelkorpus kann insbesondere aus einem Holzwerkstoff gefertigt sein, jedoch auch aus Metall, Kunststoff, Glas, Keramik, Stein, Beton oder Kombinationen hieraus gefertigt sein und einen Vollmaterialkorpus, jedoch auch eine Waben- und/oder Hohlkonstruktion bilden.

Die Kunststoffkante 1 kann, wie Fig. 1 zeigt, einen näherungsweise rechtwinkligen Querschnitt besitzen, insbesondere leisten- oder bandförmig ausgebildet sein, wobei eine Breite B der Kunststoffkante 1 deren Dicke D um ein Vielfaches übersteigt und wiederum die Länge L der Kunststoffkante 1 deren Breite B um ein Vielfaches übersteigen kann. In der Ausgangsform kann die Kunststoffkante 1 mit ihrer Breite B die Dicke des Panelkorpus3 überragen, wobei nach dem Fügen die Kunststoffkante beschnitten, abgefräst oder in anderer Weise nachbearbeitet werden kann, um die Breite der Kunststoffkante an die Dicke des Paneelkorpus anzupassen.

Die Kunststoffkante 1 besteht aus einem thermoplastischen Basismaterial, insbesondere Polypropylen, und weiteren Zusatzstoffen, die im Wege der Compoundierung mit dem genannten Basismaterial zu einer Polymerlegierung vermischt sein können. Alle Zusatzstoffe sind hierbei vorteilhafterweise zumindest näherungsweise gleichmäßig über den Querschnitt und die Länge der Kunststoffkante 1 gleichmäßig im Basismaterial verteilt, so dass sich ein insgesamt zumindest näherungsweise homogener Kantenaufbau hinsichtlich Materialzusammensetzung ergibt. Insbesondere kann die Kante einschichtig extrudiert sein.

Als Zusatzstoffe 5 können hierbei insbesondere Absorberpartikel in der eingangs beschriebenen Art sowie zumindest ein Viskositätsabsenker in der eingangs beschriebenen Art und Menge sowie ggf. weitere Zusatzstoffe wie Füllstoffe, Farbstoffe oder Pigmente zugegeben sein. Insbesondere kann als Viskositätsabsenker ein polares Polyethylenwachs mit feinen bzw. kürzeren Kettenlängen und ggf. zusätzlich ein unpolares Polyolefinwachs zugegeben sein. Über die Kettenlänge der Moleküle kann die Härte des Wachs bzw. des Kunststoffs bestimmt bzw. beeinflußt werden. Gegebenenfalls können weitere polare und unpolare Anteile zugemengt sein. Insbesondere können auch OH-Gruppen enthaltende Materialien zugemengt sein, um eine gute Bindungswirkung zu den Zellulosen des Holzwerkstoffs zu erreichen.

Wie Fig. 3 zeigt, wird die Kunststoffkante 1 vorzugsweise spitzwinklig auf die mit der Kunststoffkante zu versehene Kante des Paneelkorpus 3 zugeführt und mittels eines Presswerkzeugs 6, welches beispielsweise eine Pressrolle 7 umfassen kann, gegen den Paneelkorpus 3 gepresst. Dies erfolgt vorteilhafterweise im Durchlauf, d.h. es wird sukzessive ein wandernder Abschnitt der Kunststoffkante 1 gegen den Paneelkorpus 3 gepresst. Hierzu kann der Paneelkorpus 3 sowie die damit zu verbindende Kunststoffkante 1 in Längsrichtung der zu fügenden Kunststoffkante 1 an dem Presswerkzeug 6 gemäß dem Pfeil 8 vorbei bewegt werden. Alternativ oder zusätzlich kann die entsprechende Relativbewegung jedoch auch durch Bewegen des Presswerkzeugs 6 entlang der Kunststoffkante 1 und entlang des Paneelkorpus 3 erreicht werden, zum Beispiel bei einem Bearbeitungszentrum für geschweißte bzw. runde bzw. gerundete Paneelkorpi.

Gleichzeitig zu dem im Durchlauf erfolgenden Anpressen der Kunststoffkante 1 wird die dem Paneelkorpus 3 zugewandte Oberfläche der Kunststoffkante 1 durch einen Laserstrahl 4 beaufschlagt, der im Wesentlichen parallel zu der Längsrichtung der zu beschichtenden Kante des Paneelkorpus 3 auf die spitzwinklig zugeführte Kunststoffkante 1 gerichtet wird. Wie Fig. 3 zeigt, kann der Anstellwinkel 9 des Laserstrahls 4 zu der zu beaufschlagenden Oberfläche der Kunststoffkante 1 spitzwinklig, vorzugsweise im Bereich von 5° bis 60°, vorzugsweise 10° bis 45° betragen. Wie Fig. 3 zeigt, wird dabei der Laserstrahl 4 unmittelbar auf den Abschnitt der Kunststoffkante 1 gerichtet, welcher unmittelbar vor der Fügestelle 10 liegt bzw. unmittelbar nach der Laserbeaufschlagung gegen den Paneelkorpus 3 gepresst wird.

Vorteilhafterweise wird der Laserstrahl 4 hierbei oszillierend, insbesondere quer zur Längsrichtung der Kunststoffkante 1 oszillierend, ggf. aber auch parallel zur Längsrichtung der Kunststoffkante linear über die aufzuschmelzende Oberfläche geführt, wobei mittels des Laserstrahls 4 die gesamte oder auch nur ein Teil der gegen den Paneelkorpus zu pressenden Oberfläche der Kunststoffkante 1 aufgeschmolzen werden kann. Der Laserstrahl kann auf verschiedene Weise erzeugt werden, beispielsweise kann ein Diodenlaser, ein CO₂-Laser, ein ND-YAG-Laser, ein Faden-Laser oder ähnliche Strahlungsquellen verwendet werden, wobei auch eine Verbindung mittels Gas- oder Plasmastrahl vorgesehen sein kann.

Der Laserstrahl kann grundsätzlich mit unterschiedlichen Leistungen, mit unterschiedlichem Strahldurchmesser, mit unterschiedlichen Oszillationswegen und mit unterschiedlichen Oszillationsgeschwindigkeiten eingerichtet werden.

## Patentansprüche

1. Kunststoffkante für Möbelstücke, aus einem thermoplastischen Basismaterial, die im teilweise aufgeschmolzenen Zustand mit dem Möbelstück fügbar ist, **dadurch gekennzeichnet, dass** dem Basismaterial als Zusatzstoff (5) zumindest ein Viskositätsabsenker zur Verbesserung des Schmelzflusses zugegeben ist, wobei die Kunststoffkante (1) einen einschichtigen Aufbau mit im Wesentlichen homogener Materialzusammensetzung über den gesamten Kunststoffkantenquerschnitt besitzt.

2. Kunststoffkante nach dem vorhergehenden Anspruch, wobei der Viskositätsabsenker ein Wachs, vorzugsweise ein polares Polyethylenwachs und/oder ein unpolares Polyolefinwachs, umfasst, wobei das Wachs vorzugsweise einen Schmelzpunkt im Bereich von 50°C bis 140°C, vorzugsweise 80°C bis 130°C, besitzt.

3. Kunststoffkante nach einem der vorhergehenden Ansprüche, wobei der Viskositätsabsenker
- ein thermoplastisches Elastomer, vorzugsweise auf Olefinbasis, wobei das thermoplastische Elastomer vorzugsweise einen Schmelzpunkt im Bereich von 80° bis 140°, vorzugsweise 100° bis 130°C, besitzt, und/oder
- zumindest ein thermoplastisches Elastomer in Form von Copolyamid-Elastomer (TPE-A), Polyester-Elastomer (TPE-E) und/oder Polyurethan-Elastomer (TPE-U) oder Mischungen hieraus umfaßt, und/oder
- ein OH-Gruppen umfassendes Material und/oder paraffinische Kohlenwasserstofföle und/oder Polypropylen-, Polybuten- und/oder Polyisopren-Oligomere umfasst.

4. Kunststoffkante nach einem der vorhergehenden Ansprüche, wobei der Viskositätsabsenker einen Schmelzpunkt niedriger als der untere Rand des Schmelzbereichs des Basismaterials besitzt, wobei der Schmelzpunkt des Viskositätsabsenkers vorzugsweise um zumindest 10°C niedriger ist als der untere Rand des Schmelzbereichs des Basismaterials, und/oder der Viskositätsabsenker einen Gewichtsanteil im Bereich von 1 bis 50 Gewichtsprozent, vorzugsweise 5 bis 30 Gewichtsprozent, insbesondere 5 bis 20 Gewichtsprozent bezogen auf die Gesamtmenge des Kunststoffkantenmaterials besitzt.

5. Kunststoffkante nach einem der vorhergehenden Ansprüche, wobei das Basismaterial und der Viskositätsabsenker eine Polymerlegierung im Sinne eines Gemenges aus fertigen Polymeren bildet:

6. Kunststoffkante nach einem der vorhergehenden Ansprüche, wobei dem Basismaterial als weiterer Zusatzstoff (5) Absorberpartikel zur verbesserten Umwandlung von Laserstrahlung in Wärmeenergie zugegeben sind, wobei die Absorberpartikel über den gesamten Kunststoffkantenquerschnitt im Wesentlichen gleichförmig in dem Basismaterial verteilt sind und im sichtbaren Bereich vorzugsweise farblos ausgebildet sind.

7. Kunststoffkante nach dem vorhergehenden Anspruch, wobei die Absorberpartikel derart ausgebildet und bemessen sind und/oder der Absorptionskoeffizient der Kunstoffkante durch Bemessung der Absorberpartikelkonzentration derart eingestellt ist, dass bei Laserbestrahlung der Kunststoffkante nur eine Oberflächenschicht der Kunststoffkante mit einer Schichtdecke im Bereich von 0,05 bis 0,5 mm, vorzugsweise 0,1 bis 0,4 mm, aufschmilzt, wobei die Absorberpartikel (5) vorzugsweise einen Gewichtsanteil im Bereich von 0,001 bis 5 Gewichtsprozent, insbesondere 0,005 bis 0,5 Gewichtsprozent bezogen auf das Gesamtgewicht der Kunststoffkante besitzen.

8. Kunststoffkante nach einem der vorhergehenden Ansprüche, wobei dem thermoplastischen Basismaterial der Kunstoffkante (1) ein Haftvermittler und/oder Hafterhöher zum Erhöhen der Bindungskräfte zu Holzwerkstoffen zugegeben ist, wobei die Kunststoffkante (1) vorzugsweise polare und unpolare Molekülteile enthält, die im Wesentlichen homogen über den gesamten Kunststoffkantenquerschnitt verteilt sind.

9. Kunststoffkante nach einem der vorhergehenden Ansprüche, wobei dem Basismaterial zumindest ein weiterer Zusatzstoff (5) aus der Gruppe bestehend aus Farbstoffen, Füllstoffen und/oder Pigmenten, zugegeben ist, wobei der genannte weitere Zusatzstoff im Wesentlichen gleichmäßig über den gesamten Kunststoffkantenquerschnitt in dem Basismaterial verteilt ist.

10. Kunststoffkante nach einem der vorhergehenden Ansprüche, wobei das thermoplastische Basismaterial ein Material aus der Gruppe bestehend aus Acrylnitril-Butadien-Styrol (ABS), Polyvinylchlorid (PVC), Polypropylen (PP), Polyethylen (PE), Polycarbonat (PC), Polymethylmethacrylat (PMMA), Polyamid (PA), Copolyamid-Elastomere (TPE-A), Ethylen-Vinyl-Acetat (EVA), amorphe Polyaplphaolefine (APAO), Ethylenvinylacetat-Copolymerer (EVAC), Polyester (PES), Polyester-Elastomere (TPE-E) Polyurethan (PUR), Polyurethan-Elastomere (TPE-U) oder Mischungen hieraus, ist, wobei das Basismaterial vorzugsweise Polypropylen ist.

11. Möbelpaneel mit einem Paneelkorpus (3) und einer an den Paneelkorpus (3) gefügten Kunststoffkante (1) nach einem der vorhergehenden Ansprüche.

12. Möbelpaneel nach dem vorhergehenden Anspruch, wobei der Paneelkorpus (3) aus einem Holzwerkstoff besteht und die Kunststoffkante (1) mit einer wiedererstarrten Schmelzschicht an dem Paneelkorpus (1) stoff- und/oder formschlüssig befestigt ist, wobei die genannte wiedererstarrte Schmelzschicht eine Dicke im Bereich von 0,05 bis 0,5 mm besitzt und/oder 5% bis 35%, vorzugsweise 10% bis 20%, der Gesamtdicke der Kunststoffkante beträgt, wobei die Kunststoffkante (1) vorzugsweise eine Dicke im Bereich von 0,5 bis 5 mm, vorzugsweise 0,8 bis 3 mm, aufweist.

13. Verfahren zur Herstellung eines Möbelpaneels (2) nach einem der Ansprüche 11-12, bei dem auf einen Paneelkorpus (3) des Möbelpaneels eine Kunststoffkante (1) angebracht wird, wobei die Kunststoffkante (1) auf ihrer dem Paneelkorpus (3) zugewandten Seite mittels Laserstrahlung (4) und/oder heißem Gas- oder Plasmastrahl aufgeschmolzen und mit der aufgeschmolzenen Oberfläche (1s) gegen den Paneelkorpus (3) gedrückt wird.

14. Verfahren nach dem vorhergehenden Anspruch, wobei das Aufschmelzen der dem Paneelkorpus (3) zugewandten Oberfläche des Kunststoffbands (1) mit einem oszillierenden, vorzugsweise quer zur Längsrichtung der Kunststoffkante oszillierenden Laserstrahl und/oder einem oszillierenden heißen Gas- oder Plasmastrahl (4) bei gleichzeitigem, kontinuierlichem, im Durchlauf erfolgenden Verpressen des Kunststoffbands (1) mit dem Paneelkorpus (3) vorgenommen wird, wobei der Laserstrahl und/oder Gas- oder Plasmastrahl (4) vorzugsweise unter einem spitzen Winkel (9) von weniger als 70°, vorzugsweise 10° bis 40°, auf die aufzuschmelzende Oberfläche (1s) der Kunststoffkante (1) geführt und im Wesentlichen parallel zu der noch unbeschichteten Paneelkorpuskanfe, die mit der Kunststoffkante zu beschichten ist, geführt wird.

15. Verfahren nach einem der Ansprüche 13 bis 14, wobei der Laserstrahl (4) derart geführt und/oder fokussiert wird, dass von den über den gesamten Kantenquerschnitt verteilten Absorberpartikeln (5) im Wesentlichen nur ein Teil der Absorberpartikel (5), der in einer dem Paneelkorpus zugewandten Oberflächenschicht des Kunststoffbands angeordnet ist, von der Laserstrahlung beaufschlagt wird und/oder die Laserstrahlung in Wärme umwandelt, wobei lediglich eine dem Paneelkorpus (3) zugewandte Oberflächenschicht der Kunststoffkante (1) mit einer Schichtdicke im Bereich von 0,05 mm bis 0,5 mm, vorzugsweise 0,1 mm bis 0,4 mm ganz oder abschnittsweise aufgeschmolzen wird, während eine dem Paneelkorpus (3) abgewandte Oberfläche (1a) der Kunststoffkante (1) in einem Temperaturbereich von mindestens 50°C unter dem unteren Rand des Schmelzbereichs des Basismaterials, vorzugsweise in einem Temperaturbereich von weniger als 100°C, insbesondere weniger als 60°C gehalten wird, wobei vorzugsweise mittels einer Kühlvorrichtung die dem Paneelkorpus abgewandte Oberfläche der Kunststoffkante und/oder ein die Kunststoffkante (1) gegen den Paneelkorpus drückendes Presswerkzeug (6) gekühlt wird, wobei die Kühlvorrichtung vorzugsweise auf einer Temperatur von mindestens 60°C unter dem unteren Rand des Schmelzbereichs des Basismaterials der Kunststoffkante (1), vorzugsweise in einem Temperaturbereich von weniger als 90°C, insbesondere weniger als 50°C gehalten wird.

## Claims

1. A plastic edge for pieces of furniture, comprising a thermoplastic base material, which can be joined to the piece of furniture in a partially melted state, **characterised in that** at least one viscosity reducer is added to the base material as an additive (5) for improving the melt flow, wherein the plastic edge (1) has a single-layer design having a substantially homogeneous material composition over the total plastic edge cross-section.

2. A plastic edge in accordance with the preceding claim, wherein the viscosity reducer comprises a wax, preferably a polar polyethylene wax and/or a non-polar polyolefin wax, wherein the wax preferably has a melting point in the range from 50°C to 140°C, preferably 80°C to 130°C.

3. A plastic edge in accordance with one of the preceding claims, wherein the viscosity reducer comprises
a thermoplastic elastomer, preferably based on olefin, wherein the thermoplastic elastomer preferably has a melting point in the range from 80°C to 140°C, preferably 100°C to 130°C; and/or
at least one thermoplastic elastomer in the form of copolyamide elastomer (TPE-A), polyester elastomer (TPE-E) and/or polyurethane elastomer (TPE-U) or mixtures thereof; and/or
a material comprising OH groups and/or paraffin hydrocarbon oils and/or oligomers of polypropylene, polybutene and/or polyisoprene.

4. A plastic edge in accordance with one of the preceding claims, wherein the viscosity reducer has a melting point lower than the lower border of the melting range of the base material, wherein the melting point of the viscosity reducer is preferably at least 10°C lower than the lower border of the melting range of the base material and/or the viscosity reducer has a weight proportion in the range of 1 to 50 percent by weight, preferably 5 to 30 percent by weight, in particular 5 to 20 percent by weight, with respect to the total quantity of the plastic edge material.

5. A plastic edge in accordance with one of the preceding claims, wherein the base material and the viscosity reducer form a polymer alloy in the sense of a mixture of finished polymers.

6. A plastic edge in accordance with one of the preceding claims, wherein absorber particles are added to the base material as a further additive (5) for the improved conversion of laser radiation into thermal energy, wherein the absorber particles are distributed substantially uniformly in the base material over the total plastic edge cross-section and are preferably colourless in the visible region.

7. A plastic edge in accordance with the preceding claim, wherein the absorber particles are configured and dimensioned and/or the absorption coefficient of the plastic edge is set by dimensioning the absorber particle concentration such that on a laser irradiation of the plastic edge only a surface layer of the plastic edge melts which has a layer thickness in the range of 0.05 to 0.5 mm, preferably 0.1 to 0.4 mm, wherein the absorber particles (5) preferably have a weight proportion in the range from 0.001 to 5 percent by weight, in particular 0.005 to 0.5 percent by weight, with respect to the total weight of the plastic edge.

8. A plastic edge in accordance with one of the preceding claims, wherein an adhesion agent and/or an adhesion increasing agent is added to the thermoplastic base material of the plastic edge (1) to increase the bonding forces to wooden materials, wherein the plastic edge (1) preferably contains polar and non-polar molecules which are distributed substantially homogeneously over the total plastic edge cross-section.

9. A plastic edge in accordance with one of the preceding claims, wherein at least one further additive (5) is added to the base material, said additive being from the group comprising colourants, fillers and/or pigments, wherein the named further additive is distributed substantially uniformly in the base material over the total plastic edge cross-section.

10. A plastic edge in accordance with one of the preceding claims, wherein the thermoplastic base material is material from the group comprising acrylonitrile butadiene styrene (ABS), polyvinyl chloride (PVC), polypropylene (PP), polyethylene (PE), polycarbonate (PC), polymethyl methacrylate (PMMA), polyamide (PA), copolyamide elastomers (TPE-A), ethylene vinyl acetate (EVA), amorphous poly-alpha-olefins (APAO), ethylene vinyl acetate copolymers (EVAC), polyester (PES), polyester elastomers (TEP-E), polyurethane (PUR), polyurethane elastomers (TPE-U) or mixtures thereof, wherein the base material is preferably polypropylene.

11. A furniture panel having a panel carcass (3) and a plastic edge (1) in accordance with one of the preceding claims joined to the panel carcass (3).

12. A furniture panel in accordance with the preceding claim, wherein the panel carcass (3) comprises a wooden material and the plastic edge (1) is fastened with material continuity and/or with shape matching to the panel carcass (1) by a resolidified molten layer, wherein the named resolidified molten layer has a thickness in the range of 0.05 to 0.5 mm and/or 5% to 35%, preferably 10% to 20%, of the total thickness of the plastic edge, wherein the plastic edge (1) preferably has a thickness in the range from 0.5 to 5 mm, preferably 0.8 to 3 mm.

13. A method of manufacturing a furniture panel (2) in accordance with one of the claims 11-12, wherein a plastic edge (1) is attached to a panel carcass (3) of the furniture panel, wherein the plastic edge (1) is melted on its side facing the panel carcass (3) by means of laser radiation (4) and/or by means of a hot gas jet or plasma jet and whose melted surface (1s) is pressed against the panel carcass (3).

14. A method in accordance with the preceding claim, wherein the melting of the surface of the plastic band (1) facing the panel carcass (3) is carried out using an oscillating laser beam, preferably oscillating transversely to the longitudinal direction of the plastic edge, and/or by an oscillating hot gas jet or plasma jet (4) with a simultaneous, continuous pressing of the plastic band (1) with the panel carcass (3) taking place in a pass, wherein the laser beam and/or the gas jet or plasma jet (4) is preferably conducted onto the surface (1 s) of the plastic edge (1) to be melted at an acute angle (9) of less than 70°, preferably 10° to 40°, and substantially in parallel with the still uncoated panel carcass edge which is coated with the plastic edge.

15. A method in accordance with one of the claims 13 to 14, wherein the laser beam (4) is conducted and/or focused such that substantially only a portion of the absorber particles (5) which are distributed over the total edge cross-section, said portion being arranged in a surface layer of the plastic band facing the panel carcass, is acted on by the laser radiation and/or converts the laser radiation into heat, wherein only a surface layer of the plastic edge (1) is fully or sectionally melted which faces the panel carcass (3) and which has a layer thickness in the region from 0.05 mm to 0.5 mm, preferably 0.1 mm to 0.4 mm, while a surface (1a) of the plastic edge (1) remote from the panel carcass (3) is maintained in a temperature range of at least 50°C below the lower border of the melting range of the base material, preferably in a temperature range of less than 100°C, in particular less than 60°C, wherein the surface of the plastic edge remote from the panel carcass and/or a pressing tool (6) pressing the plastic edge (1) against the panel carcass is preferably cooled by means of a cooling apparatus, wherein the cooling apparatus is preferably maintained at a temperature of at least 60°C below the lower border of the melting range of the base material of the plastic edge (1), preferably in a temperature range of less than 90°C, in particular less than 50°C.

## Revendications

1. Chant en matière plastique pour meubles, composé d'un matériau de base thermoplastique, qui peut être joint au meuble à l'état partiellement fondu, **caractérisé en ce qu'**au moins un agent réducteur de viscosité est ajouté au matériau de base comme additif (5) pour améliorer la matière fusée, le chant en matière plastique (1) possédant un structure monocouche avec une composition du matériau essentiellement homogène sur toute la section transversale de chant en matière plastique.

2. Chant en matière plastique selon la revendication précédente, dans lequel l'agent réducteur de viscosité comprend une cire, de préférence une cire de polyéthylène polaire et/ou une cire de polyoléfine non polaire, la cire possédant de préférence un point de fusion dans la plage de 50 °C à 140 °C, de préférence de 80 °C à 130 °C.

3. Chant en matière plastique selon l'une des revendications précédentes, dans lequel l'agent réducteur de viscosité
- comprend un élastomère thermoplastique, de préférence à base d'oléfine, l'élastomère thermoplastique possédant de préférence un point de fusion dans la plage de 80 °C à 140 °C, de préférence de 100 °C à 130 °C, et/ou
- au moins un élastomère thermoplastique sous la forme d'élastomère de copolyamide (TPE-A), d'élastomère de polyester (TPE-E) et/ou d'élastomère de polyuréthane (TPE-U) ou de mélanges de ceux-ci, et/ou
- comprend un matériau comprenant des groupes OH et/ou des hydrocarbures liquides paraffiniques et/ou des oligomères de polypropylène, de polybutène et/ou de polyisoprène.

4. Chant en matière plastique selon l'une des revendications précédentes, dans lequel l'agent réducteur de viscosité possède un point de fusion inférieur à la limite inférieure de l'intervalle de fusion du matériau de base, le point de fusion de l'agent réducteur de viscosité étant de préférence inférieur d'au moins 10 °C à la limite inférieure de l'intervalle de fusion du matériau de base, et/ou l'agent réducteur de viscosité possédant une part en poids dans la plage de 1 à 50 pour cent en poids, de préférence de 5 à 30 pour cent en poids, en particulier de 5 à 20 pour cent en poids par rapport à la quantité totale de matériau du chant en matière plastique.

5. Chant en matière plastique selon l'une des revendications précédentes, dans lequel le matériau de base et l'agent réducteur de viscosité forment un alliage de polymères dans le sens d'un mélange de polymères préparés.

6. Chant en matière plastique selon l'une des revendications précédentes, dans lequel des particules absorbantes sont ajoutées au matériau de base en tant qu'autre additif (5) pour une transformation améliorée de rayonnement laser en énergie calorifique, les particules absorbantes étant distribuées dans le matériau de base essentiellement de manière homogène sur toute la section transversale de chant en matière plastique et étant réalisées de préférence incolores dans la zone visible.

7. Chant en matière plastique selon la revendication précédente, dans lequel les particules absorbantes sont réalisées et dimensionnées de telle manière et/ou le coefficient d'absorption du chant en matière plastique est défini par le dimensionnement de la concentration en particules absorbantes de telle manière que lors de l'irradiation par laser du chant en matière plastique uniquement une couche superficielle du chant en matière plastique avec une couverture de couche dans la plage de 0,05 à 0,5 mm, de préférence de 0,1 à 0,4 mm, fond, les particules absorbantes (5) possédant de préférence une part en poids dans la plage de 0,001 à 5 pour cent en poids, en particulier de 0,005 à 0,5 pour cent en poids par rapport au poids total du chant en matière plastique.

8. Chant en matière plastique selon l'une des revendications précédentes, dans lequel un agent adhésif et/ou un liant est ajouté au matériau de base thermoplastique du chant en matière plastique (1) pour augmenter les forces de liaison avec les matériaux dérivés du bois, le chant en matière plastique (1) contenant de préférence des parties de molécule polaires et non polaires qui sont distribuées essentiellement de manière homogène sur toute la section transversale de chant en matière plastique.

9. Chant en matière plastique selon l'une des revendications précédentes, dans lequel au moins un autre additif (5) du groupe constitué de colorants, de matières de remplissage et/ou de pigments, est ajouté au matériau de base, ledit autre additif étant distribué dans le matériau de base essentiellement de manière homogène sur toute la section transversale de chant en matière plastique.

10. Chant en matière plastique selon l'une des revendications précédentes, dans lequel le matériau de base thermoplastique est un matériau du groupe constitué de l'acrylonitrile butadiène styrène (ABS), du polychlorure de vinyle (PVC), du polypropylène (PP), du polyéthylène (PE), du polycarbonate (PC), du polyméthacrylate de méthyle (PMMA), du polyamide (PA), des élastomères de copolyamide (TPE-A), de l'éthylène-acétate de vinyle (EVA), des polyalphaoléfines amorphes (APAO), des copolymères d'éthylène-acétate de vinyle, du polyester (PES), des élastomères de polyester (TPE-E), du polyuréthane (PUR), des élastomères de polyuréthane (TPE-U) ou de mélanges de ceux-ci, le matériau de base étant de préférence du polypropylène.

11. Panneau de meuble comprenant un corps de panneau (3) et un chant en matière plastique (1) joint au corps de panneau (3) selon l'une des revendications précédentes.

12. Panneau de meuble selon la revendication précédente, dans lequel le corps de panneau (3) est composé d'un matériau dérivé du bois et le chant en matière plastique (1) est fixé avec une couche fondue resolidifiée sur le corps de panneau (1) par liaison de matière et/ou par complémentarité de formes, ladite couche fondue resolidifiée possédant une épaisseur dans la plage de 0,05 à 0,5 mm et/ou de 5 % à 35 %, de préférence de 10 % à 20 % de l'épaisseur totale du chant en matière plastique, le chant en matière plastique (1) présentant de préférence une épaisseur dans la plage de 0,5 à 5 mm, de préférence de 0,8 à 3 mm.

13. Procédé de fabrication d'un panneau de meuble (2) selon l'une des revendications 11 et 12, selon lequel un chant an matière plastique (1) est appliqué sur un corps de panneau (3) du panneau de meuble, le chant en matière plastique (1) étant fondu sur son côté faisant face au corps de panneau (3) au moyen d'un rayonnement laser (4) et/ou d'un jet de gaz ou de plasma chaud et pressé avec la surface fondue (1s) contre le corps de panneau (3).

14. Procédé selon la revendication précédente, dans lequel la fusion de la surface de la bande en matière plastique (1) faisant face au corps de panneau (3) est effectuée au moyen d'un rayon laser oscillant, de préférence oscillant transversalement au sens longitudinal du chant en matière plastique et/ou d'un jet de gaz ou de plasma (4) chaud oscillant avec une pression simultanée, continue, exécutée par passe, de la bande en matière plastique (1) avec le corps de panneau (3), le rayon laser et/ou le jet de gaz ou de plasma (4) étant guidé de préférence à un angle aigu (9) de moins de 70°, de préférence de 10° à 40°, sur la surface à fondre (1s) du chant en matière plastique (1) et guidé essentiellement parallèlement au chant du corps de panneau pas encore revêtu, qui doit être revêtu du chant en matière plastique.

15. Procédé selon l'une des revendications 13 à 14, dans lequel le rayon laser (4) est guidé et/ou concentré de telle manière que, parmi les particules absorbantes (5) distribuées sur toute la section transversale de chant, essentiellement uniquement une partie des particules absorbantes (5), qui est disposée dans une couche superficielle de la bande en matière plastique faisant face au corps de panneau, est soumise au rayonnement laser et/ou transforme le rayonnement laser en chaleur, seulement une couche superficielle du chant en matière plastique (1) faisant face au corps de panneau (3) d'une épaisseur de couche dans la plage de 0,05 mm à 0,5 mm, de préférence de 0,1 mm à 0,4 mm étant fondue entièrement ou sur certaines parties, tandis qu'une surface (1a) du chant en matière plastique (1) opposée au corps de panneau (3) est maintenue dans une plage de température d'au moins 50 °C sous la limite inférieure de l'intervalle de fusion du matériau de base, de préférence dans une plage de température de moins de 100 °C, en particulier de moins de 60 °C, la surface du chant en matière plastique opposée au corps de panneau et/ou un outil de pression (6) appuyant le chant en matière plastique (1) contre le corps de panneau étant de préférence refroidi au moyen d'un dispositif de refroidissement, le dispositif de refroidissement étant maintenu de préférence à une température d'au moins 60 °C sous la limite inférieure de l'intervalle de fusion du matériau de base du chant en matière plastique (1), de préférence dans une plage de température de moins de 90 °C, en particulier de moins de 50 °C.
